(19) Europäisches Patentamt
European Patent Office
Office européen des brevets

(11) **EP 4 319 308 A1**

(12) **EUROPEAN PATENT APPLICATION**
published in accordance with Art. 153(4) EPC

(43) Date of publication:
**07.02.2024 Bulletin 2024/06**

(21) Application number: **21933907.4**

(22) Date of filing: **31.03.2021**

(51) International Patent Classification (IPC):
**H04W 36/30** (2009.01)   **H04W 84/06** (2009.01)

(52) Cooperative Patent Classification (CPC):
**H04W 36/30; H04W 84/06**

(86) International application number:
**PCT/CN2021/084782**

(87) International publication number:
**WO 2022/205247 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **LI, Xiaolong
Beijing 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **CELL RESELECTION METHOD AND DEVICE, AND STORAGE MEDIUM**

(57) The present disclosure relates to a cell reselection method and device, and a storage medium. The cell reselection method is applied to a terminal, and comprises: receiving a first message, the first message comprising time information for triggering the terminal to perform cell reselection. By means of the present disclosure, the problem that the terminal belatedly performs cell reselection due to the sudden stop of a service of a serving cell can be avoided.

```
┌──────────────────────────────────────────────┐   ╭─ S11
│          receiving a first message            │──╯
└──────────────────────────────────────────────┘
```

**FIG. 2**

**Description**

**FIELD**

The present disclosure relates to the field of wireless communication technologies, and in particular to a cell reselection method, a cell reselection apparatus, and a storage medium.

**BACKGROUND**

In related communication technologies, a communication based on a terrestrial network (TN) is supported. When communicating based on the terrestrial network, a terminal mainly performs a cell reselection based on an S criterion and an R criterion. For example, when performing the cell reselection, the terminal may measure a service quality of a neighboring cell based on a signal quality of a serving cell, rank measurement results of the neighboring cell based on the R criterion, and reselect a target cell based on the measurement results and ranking results.

A non-terrestrial network (NTN) is introduced into a new generation of communication technology. For the NTN, a communication is performed based on a satellite. When the satellite performs a feeder link switch or a terminal service link switch, a network side device communicating with the terminal will suddenly stop a service. In the non-terrestrial network, in case that a measurement of the neighboring cell is started according to the signal quality of the serving cell, it may lead to a situation where the measurement of the service quality of the neighboring cell is not started, and the network side device communicating with the terminal has stopped serving.

**SUMMARY**

In order to overcome the problems existing in related technologies, the present disclosure provides a cell reselection method, a cell reselection apparatus, and a storage medium.

According to a first aspect of an embodiment of the present disclosure, there is provided a cell reselection method. The method is performed by a terminal and includes receiving a first message, in which the first message includes time information for triggering the terminal to perform a cell reselection.

In an implementation, the time information includes first time information, and the method further includes measuring a neighboring cell based on the first time information.

In an implementation, measuring the neighboring cell based on the first time information includes measuring the neighboring cell based on the first time information, in response to a frequency priority of the neighboring cell being lower than or equal to a frequency priority of a serving cell.

In an implementation, measuring the neighboring cell based on the first time information includes measuring the neighboring cell based on the first time information, in case that a signal quality of a serving cell is lower than a predefined signal quality threshold, in response to a frequency priority of the neighboring cell being lower than or equal to a frequency priority of the serving cell.

In an implementation, measuring the neighboring cell based on the first time information includes measuring the neighboring cell, in response to a frequency priority of the neighboring cell being higher than a frequency priority of a serving cell.

In an implementation, the first time information includes a first service duration for which a serving cell provides a service, and measuring the neighboring cell based on the first time information includes determining a timer duration based on the first service duration, and determining to measure the neighboring cell in response to determining that the timer duration expires.

In an implementation, the first time information includes a first service moment at which a serving cell provides a service, and measuring the neighboring cell based on the first time information of the serving cell includes determining to measure the neighboring cell, in response to a current moment reaching the first service moment.

In an implementation, the method further includes determining a service time threshold for the cell reselection, determining to measure the neighboring cell, in response to a relationship between the first time information and the service time threshold.

In an implementation, after the neighboring cell is measured, the method further includes determining a target cell based on an R criterion.

In an implementation, the time information includes second time information, and the method further includes determining a target cell based on the second time information.

In an implementation, the second time information includes a second service moment at which the neighboring cell provides a service, and determining the target cell based on the second time information includes determining a minimum difference between the second service moment and the first service moment, and determining a cell corresponding to the minimum difference as the target cell.

In an implementation, the second time information includes a second service duration for which the neighboring cell provides a service, and determining the target cell based on the second time includes determining the second service duration with a longest duration, and determining a cell corresponding to the second service duration with the longest duration as the target cell.

In an implementation, the target cell satisfies an S criterion.

In an implementation, the second time information includes a second service moment at which the neighboring cell provides a service, and determining the target cell based on the second time information includes determining at least one candidate cell based on an R criterion, determining a minimum difference between the second service moment and the first service moment, in the at least one candidate cell, and determining a candidate cell corresponding to the minimum difference as the target cell.

In an implementation, the second time information includes a second service duration for which the neighboring cell provides a service, and determining the target cell based on the second time information includes determining at least one candidate cell based on an R criterion, determining as the target cell a candidate cell with a longest second service duration in the at least one candidate cell.

In an implementation, determining the at least one candidate cell based on the R criterion includes in response to the serving cell and the neighboring cell satisfying the S criterion, determining a maximum R value in a serving cell R value and a neighboring cell R value based on the R criterion, and determining at least one cell corresponding to the maximum R value as a candidate cell, or in response to the neighboring cell satisfying the S criterion, determining a maximum R value in R values of neighboring cells based on the R criterion, and determining at least one neighboring cell corresponding to the maximum R value as a candidate cell.

In an implementation, determining the at least one candidate cell based on the R criterion includes in response to the serving cell and the neighboring cell not satisfying the S criterion, determining a maximum R value in a serving cell R value and a neighboring cell R value based on the R criterion, and determining at least one cell corresponding to the maximum R value as a candidate cell, or in response to the neighboring cell not satisfying the S criterion determining a maximum R value in R values of neighboring cells based on the R criterion, and determining at least one neighboring cell corresponding to the maximum R value as a candidate cell.

In an implementation, receiving the first message includes receiving the first message based on a system message and/or a radio resource control (RRC) message.

According to a second aspect of an embodiment of the present disclosure, there is provided a cell reselection method. The method is performed by a network side device and includes sending a first message, in which the first message includes time information for triggering a terminal to perform a cell reselection.

In an implementation, the time information includes first time information and/or second time information.

In an implementation, the first time information includes a first service duration for which a serving cell provides a service and a first service moment at which a serving cell provides a service, and the second time information includes a second service duration for which a neighboring cell provides a service and a second service moment at which a neighboring cell provides a service.

In an implementation, sending the first message includes sending the first message based on a system message and/or a radio resource control (RRC) message.

According to a third aspect of an embodiment of the present disclosure, there is provided a cell reselection apparatus. The apparatus is applied to a terminal and includes a receiving module configured to receive a first message, in which the first message includes time information for triggering the terminal to perform a cell reselection.

In an implementation, the time information includes first time information, and the apparatus further includes a measuring module. The measuring module is configured to measure a neighboring cell based on the first time information.

In an implementation, the measuring module is configured to measure the neighboring cell based on the first time information, in response to a frequency priority of the neighboring cell being lower than or equal to a frequency priority of a serving cell.

In an implementation, the measuring module is configured to measure the neighboring cell based on the first time information, in case that a signal quality of a serving cell is lower than a predefined signal quality threshold, in response to a frequency priority of the neighboring cell being lower than or equal to a frequency priority of the serving cell.

In an implementation, the measuring module is configured to measure the neighboring cell, in response to a frequency priority of the neighboring cell being higher than a frequency priority of a serving cell.

In an implementation, the first time information includes a first service duration for which a serving cell provides a service, and the measuring module is configured to determine a timer duration based on the first service duration, and determine to measure the neighboring cell in response to determining that the timer duration expires.

In an implementation, the first time information includes a first service moment at which a serving cell provides a service, and the measuring module is configured to determine to measure the neighboring cell, in response to a current moment reaching the first service moment.

In an implementation, the measuring module is configured to determine a service time threshold for the cell reselection, determine to measure the neighboring cell, in response to a relationship between the first time information and the service time threshold.

In an implementation, after the neighboring cell is measured, the apparatus further includes a determining module. The determining module is configured to determine a target cell based on an R criterion.

In an implementation, the determining module is configured to determine a target cell based on the second time information.

In an implementation, the second time information includes a second service moment at which the neighboring cell provides a service, and the determining module is configured to determine a minimum difference between the second service moment and the first service moment, and determine a cell corresponding to the minimum difference as the target cell.

In an implementation, the second time information includes a second service duration for which the neighboring cell provides a service, and the determining module is configured to determine the second service duration with a longest duration, and determine a cell corresponding to the second service duration with the longest duration as the target cell.

In an implementation, the target cell satisfies an S criterion.

In an implementation, the second time information includes a second service moment at which the neighboring cell provides a service, and the determining module is configured to determine at least one candidate cell based on an R criterion, determine a minimum difference between the second service moment and the first service moment, in the at least one candidate cell, and determine a candidate cell corresponding to the minimum difference as the target cell.

In an implementation, the second time information includes a second service duration for which the neighboring cell provides a service, and the determining module is configured to determine at least one candidate cell based on an R criterion, determine as the target cell a candidate cell with a longest second service duration in the at least one candidate cell.

In an implementation, the determining module is configured to, in response to the serving cell and the neighboring cell satisfying the S criterion, determine a maximum R value in a serving cell R value and a neighboring cell R value based on the R criterion, and determine at least one cell corresponding to the maximum R value as a candidate cell, or in response to the neighboring cell satisfying the S criterion, determine a maximum R value in R values of neighboring cells based on the R criterion, and determine at least one neighboring cell corresponding to the maximum R value as a candidate cell.

In an implementation, the determining module is configured to, in response to the serving cell and the neighboring cell not satisfying the S criterion" determine a maximum R value in a serving cell R value and a neighboring cell R value based on the R criterion, and determine at least one cell corresponding to the maximum R value as a candidate cell, or in response to the neighboring cell not satisfying the S criterion, determine a maximum R value in R values of neighboring cells based on the R criterion, and determine at least one neighboring cell corresponding to the maximum R value as a candidate cell.

In an implementation, a receiving module is configured to receive the first message based on a system message and/or a radio resource control (RRC) message.

According to a fourth aspect of an embodiment of the present disclosure, there is provided a cell reselection apparatus. The apparatus is applied to a network side device. The method includes a sending module configured to send a first message, in which the first message includes time information for triggering a terminal to perform a cell reselection.

In an implementation the time information includes first time information and/or second time information.

In an implementation the first time information includes a first service duration for which a serving cell provides a service and a first service moment at which a serving cell provides a service, and the second time information includes a second service duration for which a neighboring cell provides a service and a second service moment at which a neighboring cell provides a service.

In an implementation, the sending module is configured to send the first message based on a system message and/or a radio resource control (RRC) message.

According to a fifth aspect of an embodiment of the present disclosure, there is provided a communication device. The communication device includes a processor, and a memory, in which a computer program is stored in the memory, and the processor is configured to execute the computer program stored in the memory to cause the device to execute the method as described in the first aspect or any one of the implementations of the first aspect, or to cause the device to execute the method as described in the second aspect or any one of the implementations of the second aspect.

According to a sixth aspect of an embodiment of the present disclosure, there is provided a computer-readable storage medium having stored therein instructions that, when executed, cause the method as described in the first aspect or any one of the implementations of the first aspect to be implemented, or cause the method as described in the second aspect or any one of the implementations of the second aspect to be implemented.

The technical solution provided in the embodiment of the present disclosure may include the following beneficial effects. By means of the present disclosure, the time information may be provided for the terminal to trigger the terminal to perform the cell reselection. The problem that the terminal belatedly performs the cell reselection due to the sudden stop of the service of the serving cell may be avoided.

It is to be understood that both the foregoing general description and the following detailed description are illustrative and explanatory only and are not restrictive of the present disclosure.

## BRIEF DESCRIPTION OF THE DRAWINGS

The accompanying drawings herein, which are incorporated in and constitute a part of this specification, illustrate embodiments consistent with the present disclosure and, together with the description, serve to explain the principles of the present disclosure.

FIG. 1 is an architectural diagram showing a communication system between a network device and a terminal according to an illustrative embodiment.

FIG. 2 is a flow chart showing a cell reselection method according to an illustrative embodiment.

FIG. 3 is a flow chart showing another cell reselection method according to an illustrative embodiment.

FIG. 4 is a flow chart showing another cell reselection method according to an illustrative embodiment.

FIG. 5 is a flow chart showing another cell reselection method according to an illustrative embodiment.

FIG. 6 is a flow chart showing another cell reselection method according to an illustrative embodiment.

FIG. 7 is a flow chart showing another cell reselection method according to an illustrative embodiment.

FIG. 8 is a flow chart showing another cell reselection method according to an illustrative embodiment.

FIG. 9 is a flow chart showing another cell reselection method according to an illustrative embodiment.

FIG. 10 is a flow chart showing another cell reselection method according to an illustrative embodiment.

FIG. 11 is a flow chart showing another cell reselection method according to an illustrative embodiment.

FIG. 12 is a flow chart showing another cell reselection method according to an illustrative embodiment.

FIG. 13 is a flow chart showing another cell reselection method according to an illustrative embodiment.

FIG. 14 is a flow chart showing another cell reselection method according to an illustrative embodiment.

FIG. 15 is a flow chart showing another cell reselection method according to an illustrative embodiment.

FIG. 16 is a flow chart showing another cell reselection method according to an illustrative embodiment.

FIG. 17 is a flow chart showing another cell reselection method according to an illustrative embodiment.

FIG. 18 is a flow chart showing another cell reselection method according to an illustrative embodiment.

FIG. 19 is a flow chart showing another cell reselection method according to an illustrative embodiment.

FIG. 20 is a flow chart showing another cell reselection method according to an illustrative embodiment.

FIG. 21 is a flow chart showing another cell reselection method according to an illustrative embodiment.

FIG. 22 is a flow chart showing another cell reselection method according to an illustrative embodiment.

FIG. 23 is a block diagram showing a cell reselection apparatus according to an illustrative embodiment.

FIG. 24 is a block diagram showing another cell reselection apparatus according to an illustrative embodiment.

FIG. 25 is a block diagram showing a device for a cell reselection according to an illustrative embodiment.

FIG. 26 is a block diagram showing another device for a cell reselection according to an illustrative embodiment.

## DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

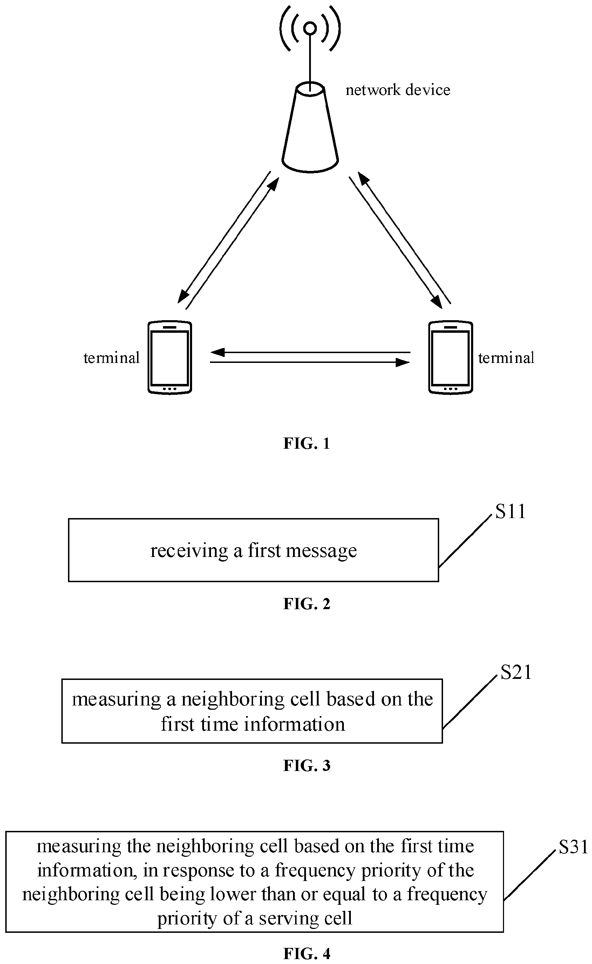

FIG. 1 is an architectural diagram showing a communication system between a network device and a terminal according to an illustrative embodiment. A communication method provided in the present disclosure may be performed by a communication system architecture diagram shown in FIG. 1. As shown in FIG. 1, a network side device may send a signaling based on an architecture shown in FIG. 1.

It may be understood that the communication system between the network device and the terminal shown in FIG. 1 is merely a schematic illustration. A wireless communication system may also include other network devices, such as a core network device, a wireless relay device, and a wireless backhaul device, which are not shown in FIG. 1. An embodiment of the present disclosure does not limit the number of network devices and terminals included in the wireless communication system.

It may be further understood that the wireless communication system according to the embodiment of the present disclosure is a network that provides a wireless communication function. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), carrier sense multiple access with collision avoidance. According to the capacity, speed, delay and other factors of different networks, the network may be divided into a 2nd generation (2G) network, a 3G network, a 4G network or a future evolution network, such as a 5G network, the 5G network may also be referred to as a new radio (NR). For convenience of description, the wireless communication network is sometimes referred to as a network in the present disclosure.

Further, the network device involved in the present disclosure may also be referred to as a wireless access network device. The wireless access network device may be a base station, an evolved node B, a home base station, an access point (AP) in a wireless fidelity (WIFI) system, a wireless relay A node, a wireless backhaul node, a transmission point (TP), a transmission and reception point (TRP), etc., and it may also be a gNB in aN NR system, or it may also be a component or part of device that constitutes a base station. When it is a vehicle to everything (V2X) communication system, the network device may also be an in-vehicle device. It is to be understood that in the embodiment of the present disclosure, a specific technology and a specific device form adopted by the network device are not limited.

Further, the terminal involved in the present disclosure may also be referred to as a terminal device, a user equipment (UE), a mobile station (MS), a mobile terminal (MT), etc. It is a device that provides voice and/or data connectivity to a user. For example, the terminal may be a handheld device with a wireless connection function, an in-vehicle device, etc. At present, some examples of terminals are a mobile phone, a pocket personal computer (PPC), a palmtop computer, a personal digital assistant (PDA), a notebook computer, a tablet computer, a wearable device, or an in-vehicle device. In addition, when it is a vehicle to everything (V2X) communication system, the terminal device may also be an in-vehicle device. It is to be understood that a specific technology and a specific device adopted by the terminal are not limited in the embodiment of the present disclosure.

In a communication technology, based on a terrestrial network side device for communication, when performing a cell reselection, the terminal may measure a service quality of a neighboring cell based on an S criterion, and rank measurement results of the neighboring cell based on an R criterion, and reselect a target cell.

The S criterion includes that a cell selection level $S_{rxlev}$ is greater than zero, and a cell selection quality $S_{qual}$ is greater than zero. That is, $S_{rxiev} > 0$ and $S_{qual} > 0$. A cell selected/reselected by the terminal needs to satisfy the above-mentioned S criterion.

$S_{rxlev}$ is determined based on an RSRP value ($Q_{rxlevmeas}$) of a measured cell, a required minimum reception level in a cell ($Q_{rxlevmin}$), a minimum reception level offset ($Q_{rxlevminoffset}$), a cell power related parameter ($P_{compensation}$), and an offset value temporarily applied to the cell ($Q_{offsettemp}$). $P_{compensation}$ is used to punish a UE that cannot reach a maximum power of the cell. $p_{Compensation}=\max(p_{Max} - p_{uMax}, 0)$ (dB), where the $p_{Max}$ represents a maximum uplink transmission

$$S_{rxlev} = Q_{rxlevmeas} - (Q_{rxlevmin} + Q_{rxlevminoffset}) - P_{compensation} - Q_{offsettemp}$$

power of the UE allowed by the cell, and the $p_{uMax}$ represents a maximum uplink transmission power supported by a UE capability. Reference may be made to the following formula.

$S_{qual}$ is determined based on an RSRQ value ($Q_{qualmeas}$) of the measured cell, a minimum received signal quality ($Q_{qualmin}$), and a minimum received signal received quality offset value ($Q_{qualminoffset}$), and the $Q_{offsettemp}$. Reference may be made to the following formula.

$$S_{qual} = Q_{qualmeas} - (Q_{qualmin} + Q_{qualminoffset}) - Q_{offsettemp}$$

Further, regarding $S_{rxlev}$, $S_{qual}$, $Q_{rxlevmeas}$, $Q_{rxlevmin}$, $Q_{rxlevminoffset}$, $Q_{offsettemp}$, $Q_{qualmeasp}$, $Q_{qualmin}$, $Q_{quaiminoffset}$, and $C_{ompensation}$, reference may be made to Table 1 below.

Table 1

| | |
|---|---|
| $S_{rxlev}$ | Cell selection RX level value (dB) |
| $S_{qual}$ | Cell selection quality value (dB) |
| $Q_{offsettemp}$ | Offset temporarily applied to a cell as specified in TS 38.331 [3] (dB) |
| $Q_{rxlevmeas}$ | Measured cell RX level value (RSRP) |
| $Q_{qualmeas}$ | Measured cell quality value (RSRQ) |
| $Q_{rxlevmin}$ | Minimum required RX level in the cell (dBm). If the UE supports SUL frequency for this cell, $Q_{rxlevmin}$ is obtained from *q-RxLevMinSUL*, if present, in *SIB1*, *SIB2* and *SIB4,* additionally, if $Q_{rxlevminoffsetcellSUL}$ is present in *SIB3* and *SIB4* for the concerned cell, this cell specific offset is added to the corresponding Qrxlevmin to achieve the required minimum RX level in the concerned cell; else $Q_{rxievmin}$ is obtained from *q-RxLevMin* in *SIB1*, *SIB2* and *SIB4,* additionally, if $Q_{rxlevminoffsetcell}$ is present in *SIB3* and *SIB4* for the concerned cell, this cell specific offset is added to the corresponding Qrxlevmin to achieve the required minimum RX level in the concerned cell. |
| $Q_{qualmin}$ | Minimum required quality level in the cell (dB). Additionally, if $Q_{qualminoffsetcell}$ is signalled for the concerned cell, this cell specific offset is added to achieve the required minimum quality level in the concerned cell. |
| $Q_{rxlevminoffset}$ | Offset to the signalled $Q_{rxlevmin}$ taken into account in the Srxlev evaluation as a result of a periodic search for a higher priority PLMN while camped normally in a VPLMN, as specified in TS 23.122 [9]. |
| $Q_{qualminoffset}$ | Offset to the signalled $Q_{qualinin}$ taken into account in the Squal evaluation as a result of a periodic search for a higher priority PLMN while camped normally in a VPLMN, as specified in TS 23.122 [9]. |
| $P_{compensation}$ | For FR1, if the UE supports the *additionalPmax* in the *NR-NS-PmaxList,* if present, in *SIB1*, *SIB2* and *SIB4*: <br> $max(P_{EMAX1} - P_{PowerClass}, 0) - (min(P_{EMAX2}, P_{PowerClass}) - min(P_{EMAX1}, P_{PowerClass}))$ *(dB);* <br> *else:* <br> $max(P_{EMAX1}, P_{PowerClass}, 0)$ *(dB)* <br> For FR2, $P_{compensation}$ is set to 0. |
| $P_{EMAX1}$, $P_{EMAX2}$ | Maximum TX power level of a UE may use when transmitting on the uplink in the cell (dBm) defined as $P_{EMAX}$ in TS 38.101 [15]. If UE supports SUL frequency for this cell, $P_{EMAX1}$ and $P_{EMAX2}$ are obtained from the *p-Max* for SUL in *SIB1* and *NR-NS-PmaxList* for SUL respectively in *SIB1*, *SIB2* and *SIB4* as specified in TS 38.331 [3], else $P_{EMAX1}$ and $P_{EMAX2}$ are obtained from the *p-Max* and *NR-NS-PmaxList* respectively in *SIB1*, *SIB2* and *SIB4* for normal UL as specified in TS 38.331 [3]. |

(continued)

| $P_{PowerClass}$ | Maximum RF output power of the UE (dBm) according to the UE power class as defined in TS 38.101-1 [15]. |
|---|---|

The terminal may determine a time for measuring the neighboring cell according to the above-mentioned S criterion, and rules include as follows.

For an intra-frequency neighboring cell measurement, in case that the serving cell's $S_{rxlev} > S_{IntraSearchP}$, the terminal may choose not to measure the neighboring cell. On the contrary, in case that the serving cell's $S_{rxlev} < S_{IntraSearchP}$, the terminal may choose to measure the neighboring cell, and the UE needs to measure the neighboring cell.

For an inter-frequency neighboring cell measurement, in case that a frequency priority of the neighboring cell is less than or equal to a frequency priority of a serving cell, and the serving cell's $S_{rxiev} > S_{nonIntraSearchP}$, the terminal may choose not to measure the neighboring cell. On the contrary, in case that a frequency priority of the neighboring cell is less than or equal to a frequency priority of a serving cell, and the serving cell's $S_{rxiev} < S_{nonIntraSearchP}$, the terminal needs to measure the neighboring cell.

In related technologies, an R criterion includes the following formulas:

$$Rs = Q_{meas,s} + Q_{hyst} - Q_{offsettemp}, \quad Rn = Q_{meas,n} - Q_{offset} - Q_{offsettemp}$$

where Rs represents an R value of the serving cell, Rn represents an R value of the neighboring cell, $Q_{meas,s}$ represents an RSRP measurement value of the serving cell, $Q_{meas,n}$ represents an RSRP measurement value of the neighboring cell, $Q_{hyst}$ represents a cell reselection hysteresis value, $Q_{offset}$ represents a temporary offset value, and $Q_{offset}$ represents an offset value. Reference is made to Table 2 below for details.

Table 2

| $Q_{meas}$ | RSRP measurement quantity used in cell reselections. |
|---|---|
| Qoffset | For intra-frequency: Equals to $Qoffset_{s,n}$, if $Qoffset_{s,n}$ is valid, otherwise this equals to zero. For inter-frequency: Equals to $Qoffset_{s,n}$ plus $Qoffset_{frequency}$, if $Qoffset_{s,n}$ is valid, otherwise this equals to $Qoffset_{frequency}$. |
| $Qoffset_{temp}$ | Offset temporarily applied to a cell as specified in TS 38.331 [3]. |

When the terminal measures the neighboring cell, an R value of each cell is calculated according to the above-mentioned R criterion, and the terminal merely performs R criterion ranking on the neighboring cells that satisfy the S criterion.

A non-terrestrial network (NTN) is introduced into a new generation communication technology, and the NTN performs communication based on a satellite. When the satellite performs a feeder link switch or a service link switch, the network side device communicating with the terminal will suddenly stop serving. In the non-terrestrial network, in case that the measurement of the neighboring cell is started according to the S criterion, it may lead to a situation where the measurement of the service quality of the neighboring cell is not started, and the network side device communicating with the terminal has stopped serving.

In related technologies, the NTN may determine information to stop serving an area and/or timing information (such as a timer or an absolute time) about a new upcoming cell. In case that both types of time information are needed, FFS is learned from system information and/or ephemeris. That is, the NTN may provide information for assisting the terminal to perform the cell reselection. The information may be time information when the serving cell may provide a service/stop a service, and the information is used to trigger the UE to measure the neighboring cell. The information may also be time information of the neighboring cell that are about to provide the service to the terminal or may provide the service to the terminal, so as to assist the terminal to select an appropriate neighboring cell.

Therefore, the present disclosure provides a cell reselection method. Using the time information when the serving cell provided by the NTN may provide the service/stop the service, and/or the time information of the neighboring cell that are about to provide the service to the terminal or may provide the service to the terminal, the terminal is triggered to perform the cell reselection in advance, so as to avoid the situation where when the satellite performs the feeder link switch or the service link switch, the measurement of the service quality of the neighboring cell is not started, and the network side device communicating with the terminal has stopped service.

FIG. 2 is a flow chart showing a cell reselection method according to an illustrative embodiment. As shown in FIG. 2, the cell reselection method is performed by a terminal and includes a step as follows.

In step S11, a first message is received.

In an embodiment of the present disclosure, the first message includes time information for triggering the terminal to perform a cell reselection. The time information may include at least one of time information when a serving cell may provide a service, time information when a serving cell stops a service, and time information of a neighboring cell that is about to provide a service.

The time information when the serving cell may provide the service may be duration information when the serving cell provides the service. For example, a duration that may be provided for the terminal is N minutes. The time information when the serving cell stops the service may be a stopping moment at which the serving cell provides the service for the terminal. For example, the stopping moment of the service provided by the serving cell is XX hours, XX minutes, and XX seconds. That is, at this moment, the serving cell stops the service. The time information of the neighboring cell that is about to provide the service may be a starting service moment at which the neighboring cell may provide the service for the terminal, or a service duration for which the service is provided for the terminal, or the like.

In some embodiments of the present disclosure, the terminal receives the time information sent by the serving cell, and determines a time to perform measurement on the neighboring cell and perform the cell reselection according to the time information.

By means of the cell reselection method provided in the present disclosure, the network side device provides the time information of the service of the serving cell or the neighboring cell, and determines the measurement and reselection of the cell based on the time information, so that the terminal will not cause too late cell reselection due to sudden unavailability of the serving cell.

FIG. 3 is a flow chart showing a cell reselection method according to an illustrative embodiment. As shown in FIG. 3, the cell reselection method is performed by a terminal and includes a step as follows.

In step S21, a neighboring cell is measured based on the first time information.

In an embodiment of the present disclosure, as described above, the time information may include the time information when the serving cell may provide the service and/or the time information when the serving cell stops the service. In the present disclosure, for convenience of description, the time information when the serving cell may provide the service and/or the time information when the serving cell stops the service is referred to as the first time information.

In some embodiments of the present disclosure, the terminal triggers a measurement of the neighboring cell based on the first time information. The cell reselection is performed based on measurement results. The measurement of the neighboring cell by the terminal may include one or more of acquiring an ID of the neighboring cell, acquiring a system message of a cell, and measuring a signal quality of a cell.

FIG. 4 is a flow chart showing a cell reselection method according to an illustrative embodiment. As shown in FIG. 4, the cell reselection method is performed by a terminal and includes a step as follows.

In step S31, the neighboring cell is measured based on the first time information, in response to a frequency priority of the neighboring cell being lower than or equal to a frequency priority of a serving cell.

In some embodiments of the present disclosure, for a case of inter-frequency measurement, in one way, in case that the frequency priority of the neighboring cell is lower than the frequency priority of the serving cell, or the frequency priority of the neighboring cell is the same as the frequency priority of the serving cell, the terminal may also determine a time for measuring the neighboring cell according to the first time information. In one way, in case that the frequency priority of the neighboring cell is lower than the frequency priority of the serving cell or the frequency priority of the neighboring cell is the same as the frequency priority of the serving cell, even if the signal quality of the serving cell is higher than a predefined signal quality threshold, the measurement is performed based on time information.

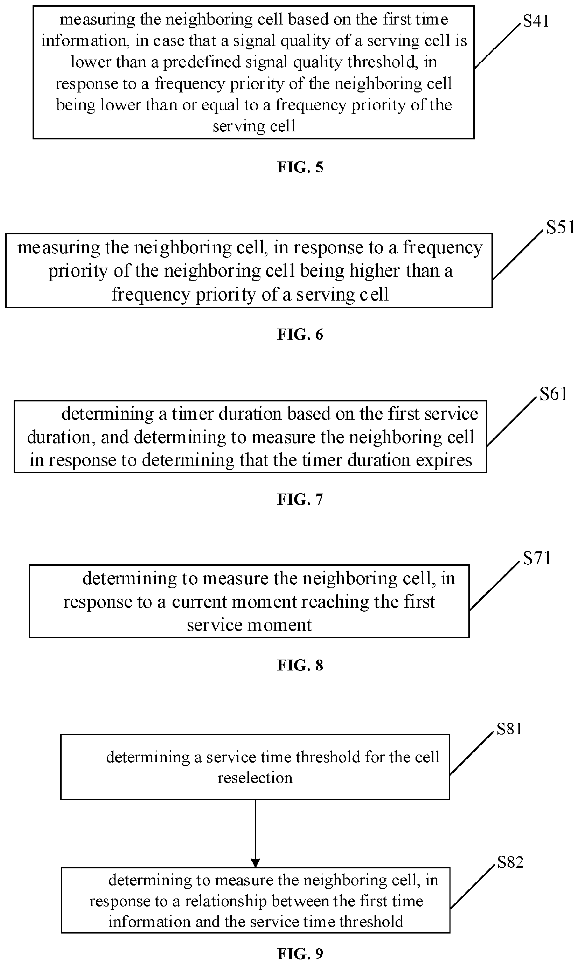

FIG. 5 is a flow chart showing a cell reselection method according to an illustrative embodiment. As shown in FIG. 5, the cell reselection method is performed by a terminal. This embodiment may be executed alone, or may be executed together with any other embodiment of the present disclosure. The method includes a step as follows.

In step S41, the neighboring cell is measured based on the first time information, in case that a signal quality of a serving cell is lower than a predefined signal quality threshold, in response to a frequency priority of the neighboring cell being lower than or equal to a frequency priority of the serving cell.

In some embodiments of the present disclosure, for a case of intra-frequency cell measurement, in case that the frequency priority of the neighboring cell is lower than the frequency priority of the serving cell, or the frequency priority of the neighboring cell is equal to the frequency priority of the serving cell, and the signal quality of the serving cell is lower than the predefined signal quality threshold, that is, $S_{rxiev} \leq S_{IntraSearchP}$, the terminal measures the neighboring cell based on the first time.

FIG. 6 is a flow chart showing a cell reselection method according to an illustrative embodiment. As shown in FIG. 6, the cell reselection method is performed by a terminal and includes a step as follows.

In step S51, the neighboring cell is measured, in response to a frequency priority of the neighboring cell being higher than a frequency priority of a serving cell.

In some embodiments of the present disclosure, in case that the frequency priority of the neighboring cell is higher than the frequency priority of the serving cell, the terminal does not need to consider the first time information, and always measures the neighboring cell.

In some embodiments of the present disclosure, the first time information may include a first service duration for which a serving cell provides a service.

FIG. 7 is a flow chart showing a cell reselection method according to an illustrative embodiment. As shown in FIG. 7, the cell reselection method is performed by a terminal and includes a step as follows.

In step S61, a timer duration is determined based on the first service duration, and it is determined to measure the neighboring cell in response to determining that the timer duration expires.

In an embodiment of the present disclosure, in case that the first time information is the first service duration for which the serving cell provides the service, after the terminal accesses the serving cell, the first service duration provided by the serving cell for the terminal is determined through the first time information indicated by the network side device. The terminal determines a timer device of the terminal based on the first service duration, and determines a duration of the timer as the first service duration. In response to determining that the timer duration expires, that is, exceeding the first service duration of the serving cell, it is determined that the measurement is performed on the neighboring cell.

In some embodiments of the present disclosure, the first time information may include a first service moment at which a serving cell provides a service.

FIG. 8 is a flow chart showing a cell reselection method according to an illustrative embodiment. As shown in FIG. 8, the cell reselection method is performed by a terminal. This embodiment may be executed alone, or may be executed together with any other embodiment of the present disclosure. The method includes a step as follows.

In step S71, it is determined to measure the neighboring cell, in response to a current moment reaching the first service moment.

In some embodiments of the present disclosure, in case that the first time information is the first service moment at which the serving cell provides the service, a moment at which the serving cell stops the service is further determined through received first time information. The first service moment may be an absolute time, such as a system time provided by the network. The terminal determines its own current moment, or the system time provided by the network, and compares it with the first service moment. In case that the current moment reaches the first service moment, it is determined to measure the neighboring cell. The terminal may acquire the system time provided by the network based on a system broadcast message SIB9.

FIG. 9 is a flow chart showing a cell reselection method according to an illustrative embodiment. As shown in FIG. 9, the cell reselection method is performed by a terminal and includes steps as follows.

In step S81, a service time threshold for the cell reselection is determined.

In an embodiment of the present disclosure, the service time threshold may also be predefined for a cell providing a service. The service time threshold is determined as a threshold for the cell reselection.

In step S82, it is determined to measure the neighboring cell, in response to a relationship between the first time information and the service time threshold.

In an implementation of the present disclosure, in response to the first time information being the first service duration, in case that the first service duration is greater than or equal to the service time threshold, it is determined to measure the neighboring cell. Alternatively, in case that the first service duration is less than or equal to the service time threshold, it is determined to measure the neighboring cell.

In some embodiments of the present disclosure, for the case of intra-frequency cell measurement, in case that the frequency priority of the neighboring cell is lower than or equal to the frequency priority of the serving cell, the first service duration is greater than or equal to the service time threshold, and the signal quality of the serving cell is lower than the predefined signal quality threshold, it is determined to measure the neighboring cell.

In some embodiments of the present disclosure, for the case of intra-frequency cell measurement, in case that the frequency priority of the neighboring cell is lower than or equal to the frequency priority of the serving cell, is less than or equal to the service time threshold, and the signal quality of the serving cell is lower than the predefined signal quality threshold, it is determined to measure the neighboring cell.

In response to the first time information being the first service moment, in case that the first service moment is greater than or equal to the service time threshold, the terminal determines to measure the neighboring cell. Alternatively, in case that the first service moment is less than or equal to the service time threshold, it is determined to measure the neighboring cell.

In some embodiments of the present disclosure, for the case of intra-frequency cell measurement, in case that the frequency priority of the neighboring cell is lower than or equal to the frequency priority of the serving cell, the first service moment is greater than or equal to the service time threshold, and the signal quality of the serving cell is lower than the predefined signal quality threshold, it is determined to measure the neighboring cell.

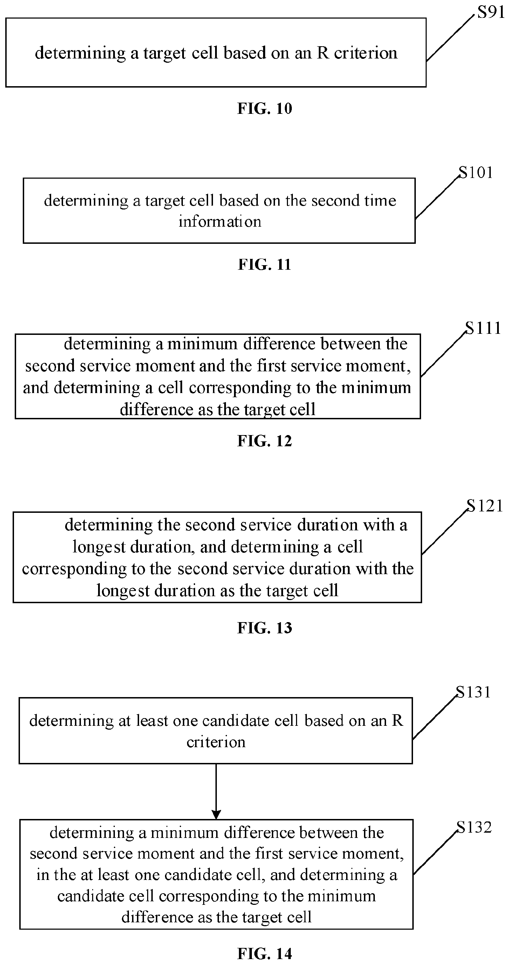

In some embodiments of the present disclosure, for the case of intra-frequency cell measurement, in case that the frequency priority of the neighboring cell is lower than or equal to the frequency priority of the serving cell, the first service moment is less than or equal to the service time threshold, and the signal quality of the serving cell is lower than the predefined signal quality threshold, it is determined to measure the neighboring cell. FIG. 10 is a flow chart showing a cell reselection method according to an illustrative embodiment. As shown in FIG. 10, the cell reselection method is performed by a terminal. This embodiment may be executed alone, or may be executed together with any other embodiment of the present disclosure. The method includes a step as follows.

In step S91, a target cell is determined based on an R criterion.

In an embodiment of the present disclosure, as described above, the measurement of neighboring cell is performed to determine an R value of each cell. Based on the R criterion, the R values are ranked to determine a cell with a maximum R value. In the cell with the maximum R value, the target cell is determined.

In some embodiments of the present disclosure, the time information may also include second time information, in which the second time information is time information of the neighboring cell that may be provided.

FIG. 11 is a flow chart showing a cell reselection method according to an illustrative embodiment. As shown in FIG. 11, the cell reselection method is performed by a terminal. This embodiment may be executed alone, or may be executed together with any other embodiment of the present disclosure. The method includes a step as follows.

In step S101, a target cell is determined based on the second time information.

In some embodiments of the present disclosure, the terminal may determine the target cell based on the above-mentioned measured R value of the neighboring cell. Alternatively, the target cell is determined according to the second time information. Alternatively, the target cell is determined according to the R value and the second time information of the target cell.

In some embodiments of the present disclosure, the second time information may include a second service moment at which the neighboring cell provides a service.

FIG. 12 is a flow chart showing a cell reselection method according to an illustrative embodiment. As shown in FIG. 12, the cell reselection method is performed by a terminal. This embodiment may be executed alone, or may be executed together with any other embodiment of the present disclosure. The method includes a step as follows.

In step S111, a minimum difference between the second service moment and the first service moment is determined, and a cell corresponding to the minimum difference is determined as the target cell.

In some embodiments of the present disclosure, the terminal determines the first service moment at which the serving cell stops the service and the second service moment at which the neighboring cell may provide the service for the terminal. A neighboring cell that provides the service for the terminal fastest is determined. In other words, a cell with a minimum difference between the second service moment at which the service may be provided for the terminal and the first service moment at which the serving cell stops the service is determined as the target cell.

In one way, the cell with the minimum difference between the second service moment at which the service may be provided for the terminal and the first service moment at which the serving cell stops the service and satisfying the S criterion is determined as the target cell.

In another way, in case that the cell with the minimum difference between the second service moment at which the service is provided and the first service moment at which the serving cell stops the service does not satisfy the S criterion, all differences are ranked. The minimum difference is a first minimum difference, a second minimum difference is determined as a second minimum difference, and so on, also including a third minimum difference. In response to determining that a cell with the second minimum difference satisfies the S criterion, the cell corresponding to the second minimum difference is determined as the target cell. And so on, until the target cell is determined.

In some embodiments of the present disclosure, the second time information may include a second service duration for which the neighboring cell provides a service.

FIG. 13 is a flow chart showing a cell reselection method according to an illustrative embodiment. As shown in FIG. 13, the cell reselection method is performed by a terminal. This embodiment may be executed alone, or may be executed together with any other embodiment of the present disclosure. The method includes a step as follows.

In step S121, the second service duration with a longest duration is determined, and a cell corresponding to the second service duration with the longest duration is determined as the target cell.

In some embodiments of the present disclosure, in case that the second time information includes the second service duration for which the neighboring cell provides the service, the neighboring cell is ranked based on the second service duration, and the second service duration with the longest duration is determined. The cell corresponding to the second service duration with the longest duration is determined as the target cell.

In one way, the cell corresponding to the second service duration with the longest duration and satisfying the S criterion is determined as the target cell.

In another way, in case that the cell corresponding to the second service duration with the longest duration does not satisfy the S criterion, all the second service durations are ranked. A cell corresponding to the second service duration which is second only to the second service duration with the longest duration and satisfying the S criterion is determined as the target cell. And so on, until the target cell is determined.

In some embodiments of the present disclosure, the second time information may include a second service moment at which the neighboring cell provides a service, and the following embodiments may also be adopted.

FIG. 14 is a flow chart showing a cell reselection method according to an illustrative embodiment. As shown in FIG. 14, the cell reselection method is performed by a terminal. This embodiment may be executed alone, or may be executed together with any other embodiment of the present disclosure. The method includes steps as follows.

In step S 131, at least one candidate cell is determined based on an R criterion.

In step S 132, in the at least one candidate cell, a minimum difference between the second service moment and the first service moment is determined, and a candidate cell corresponding to the minimum difference is determined as the target cell.

In an embodiment of the present disclosure, the R value of each cell is determined and ranked based on the R criterion. The first number of cells ranked in front are selected. For example, according to the ranking of the R values, N cells with the best signal qualities ranked in front are selected. In the N cells with the best signal qualities, a neighboring cell that provides the service for the terminal fastest is determined. In other words, according to the ranking of the R value of each cell, in the N cells with a maximum R value, a cell with the minimum difference between the second service moment at which the service may be provided for the terminal and the first service moment at which the serving cell stops the service is determined as the target cell.

In some embodiments of the present disclosure, the second time information may include a second service duration for which the neighboring cell provides a service.

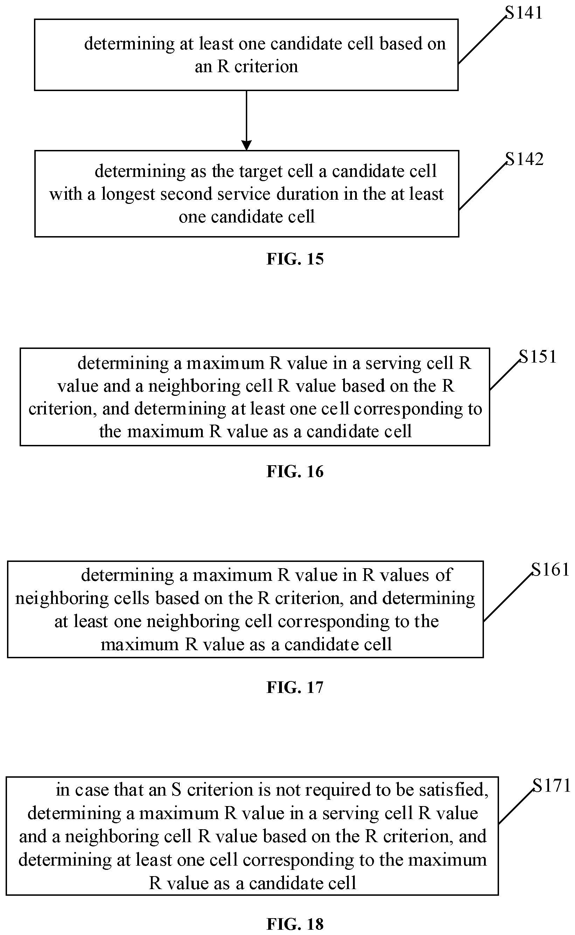

FIG. 15 is a flow chart showing a cell reselection method according to an illustrative embodiment. As shown in FIG. 15, the cell reselection method is performed by a terminal. This embodiment may be executed alone, or may be executed together with any other embodiment of the present disclosure. The method includes steps as follows.

In step S141, at least one candidate cell is determined based on an R criterion.

In step S142, It is determined as the target cell a candidate cell with a longest second service duration in the at least one candidate cell.

In some embodiments of the present disclosure, the R value of each cell is determined and ranked based on the R criterion. The first number of cells ranked in front are selected. For example, according to the ranking of the R values, and N candidate cells with best signal qualities ranked in front are selected. In the N cells with the best signal qualities, the second service duration with the longest duration is determined. The cell corresponding to the second service duration with the longest duration is determined as the target cell.

FIG. 16 is a flow chart showing a cell reselection method according to an illustrative embodiment. As shown in FIG. 16, the cell reselection method is performed by a terminal. This embodiment may be executed alone, or may be executed together with any other embodiment of the present disclosure. The method includes a step as follows.

In step S151, a maximum R value in a serving cell R value and a neighboring cell R value are determined based on the R criterion, and at least one cell corresponding to the maximum R value is determined as a candidate cell.

In some embodiments of the present disclosure, in case that the serving cell and the neighboring cell satisfy the S criterion, that is, $S_{rxlev}>0$ and $S_{qual}>0$, the neighboring cell R value and the serving cell R value are calculated based on the R criterion, and the ranking is performed based on calculation results of the R values. The at least one cell with the maximum R value is determined as the candidate cell.

FIG. 17 is a flow chart showing a cell reselection method according to an illustrative embodiment. As shown in FIG. 17, the cell reselection method is performed by a terminal. This embodiment may be executed alone, or may be executed together with any other embodiment of the present disclosure. The method includes a step as follows.

In step S161, a maximum R value in R values of neighboring cells is determined based on the R criterion, and at least one neighboring cell corresponding to the maximum R value is determined as a candidate cell.

In some embodiments of the present disclosure, in case that neighboring cell satisfies the S criterion, that is, $S_{rxlev}>0$ and $S_{qual}>0$, the R values of neighboring cells are calculated based on the R criterion, and the ranking is performed based on calculation results of the R values. The at least one neighboring cell with the maximum R value is determined as the candidate cell. For the convenience of understanding, illustratively, the neighboring cells include 100 cells, of which 50 cells satisfy the S criterion and 50 cells do not satisfy the S criterion. The number of cells ranked based on the R value is 50.

It is to be noted that, in the embodiment, a calculated R value does not include the serving cell, that is, the signal quality of the serving cell is not ranked. It is avoided that the cell reselection fails due to the best signal quality of the serving cell.

FIG. 18 is a flow chart showing a cell reselection method according to an illustrative embodiment. As shown in FIG. 18, the cell reselection method is performed by a terminal. This embodiment may be executed alone, or may be executed together with any other embodiment of the present disclosure. The method includes a step as follows.

In step S171, in case that an S criterion is not required to be satisfied, a maximum R value in a serving cell R value and a neighboring cell R value is determined based on the R criterion, and at least one cell corresponding to the maximum R value is determined as a candidate cell.

In some embodiments of the present disclosure, in case that the S criterion is not required to be satisfied, the neighboring cell R value and the serving cell R value are calculated based on the R criterion, and the serving cell R value and the neighboring cell R value are ranked. The ranking is performed based on calculation results of R values. The at least one cell with the maximum R value is determined as the candidate cell.

It is to be noted that, in the embodiment, the cells ranked based on the R value may or may not satisfy the S criterion. For the convenience of understanding, illustratively, the neighboring cells include 100 cells, of which 50 cells satisfy the S criterion and 50 cells do not satisfy the S criterion. The number of cells ranked based on the R value is 100.

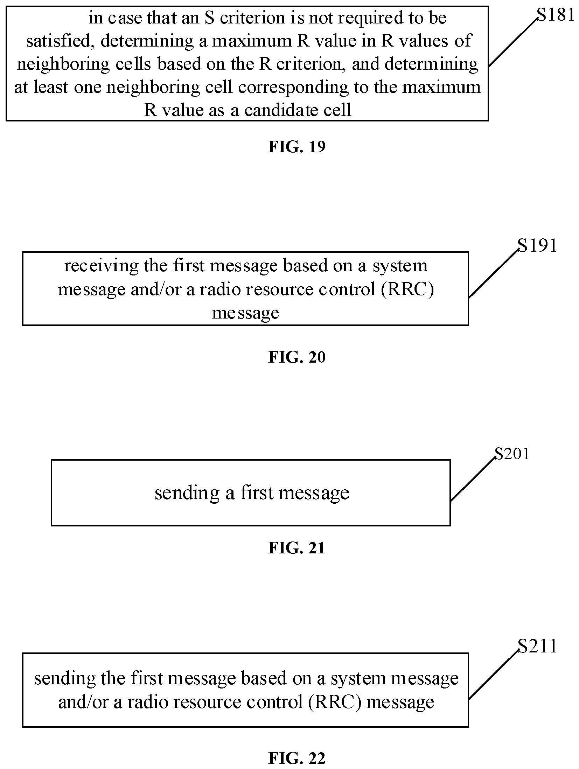

FIG. 19 is a flow chart showing a cell reselection method according to an illustrative embodiment. As shown in FIG. 19, the cell reselection method is performed by a terminal. This embodiment may be executed alone, or may be executed together with any other embodiment of the present disclosure. The method includes a step as follows.

In step S181, in case that an S criterion is not required to be satisfied, a maximum R value in R values of neighboring cells is determined based on the R criterion, and at least one neighboring cell corresponding to the maximum R value is determined as a candidate cell.

In some embodiments of the present disclosure, in case that the S criterion is not required to be satisfied, the R values of neighboring cells are calculated based on the R criterion, and the serving cell R value and the neighboring cell R value are ranked. The ranking is performed based on calculation results of R values. The at least one cell with the maximum R value is determined as the candidate cell.

It is to be noted that, in the embodiment, the cells ranked based on the R value may or may not satisfy the S criterion. For the convenience of understanding, illustratively, the neighboring cells include 100 cells, of which 50 cells satisfy the S criterion and 50 cells do not satisfy the S criterion. The number of cells ranked based on the R value is 100.

In an embodiment of the present disclosure, for the case of intra-frequency cell measurement, in case that the frequency priority of the neighboring cell is lower than or equal to the frequency priority of the serving cell, the signal quality of the serving cell is lower than the predefined signal quality threshold, and the timer determined based on the first service duration expires, it is determined to measure the neighboring cell. The R value of the measurement result is obtained.

In combination with an embodiment of the present disclosure, the R value of each cell may be determined and ranked based on the measurement values of neighboring cells and the R criterion. The first number of cells ranked in front are selected. For example, according to the ranking of the R values, N cells with the best signal qualities ranked in front are selected. In the N cells with the best signal qualities, a neighboring cell that provides the service for the terminal fastest is determined. In other words, according to the ranking of the R value of each cell, in the N cells with a maximum R value, a cell with the minimum difference between the second service moment at which the service may be provided for the terminal and the first service moment at which the serving cell stops the service is determined as the target cell.

In combination with an embodiment of the present disclosure, the R value of each cell may be determined and ranked based on the R criterion. The first number of cells ranked in front are selected. For example, according to the ranking of the R values, the first N candidate cells with best signal qualities are selected. In the N cells with the best signal qualities, the second service duration with the longest duration is determined. The cell corresponding to the second service duration with the longest duration is determined as the target cell.

In combination with an embodiment of the present disclosure, in case that the serving cell and the neighboring cell satisfy the S criterion, that is, $S_{rxlev}>0$ and $S_{qual}>0$, the neighboring cell R value and the serving cell R value are calculated based on the R criterion. The ranking is performed based on calculation results of the R values. The at least one cell with the maximum R value is determined as the candidate cell. The Neighboring cell may also not be required to satisfy the S criterion, that is, in a case of not satisfying the S criterion, the R values of neighboring cells are calculated based on the R criterion, and the serving cell R value and the neighboring cell R value are ranked. The ranking is performed based on the calculation results of R values. The at least one cell with the maximum R value is determined as the candidate cell.

In combination with an embodiment of the present disclosure, in case that the neighboring cell satisfies the S criterion, that is, $S_{rxlev}>0$ and $S_{qual}>0$, the R values of neighboring cells may be calculated based on the R criterion, and the ranking is performed based on the calculation results of the R values. The at least one neighboring cell with the maximum R value is determined as the candidate cell. The neighboring cell may also not be required to satisfy the S criterion, that is, in a case of not satisfying the S criterion, the R values of neighboring cells are calculated based on the R criterion, and the R values of neighboring cells are ranked. The ranking is performed based on the calculation results of R values. The at least one cell with the maximum R value is determined as a candidate cell.

In another embodiment of the present disclosure, for the case of intra-frequency cell measurement, in case that the frequency priority of the neighboring cell is lower than or equal to the frequency priority of the serving cell, the signal quality of the serving cell is lower than the predefined signal quality threshold, and the first service duration is lower than or equal to the service time threshold, it is determined to measure the neighboring cell.

In combination with another embodiment of the present disclosure, the R value of each cell may be determined and ranked based on the measurement values of neighboring cells and the R criterion. The first number of cells ranked in front are selected. For example, according to the ranking of the R values, N cells with the best signal qualities ranked in front are selected. In the N cells with the best signal qualities, a neighboring cell that provides the service for the terminal fastest is determined. In other words, according to the ranking of the R value of each cell, in the N cells with a maximum R value, a cell with the minimum difference between the second service moment at which the service may be provided for the terminal and the first service moment at which the serving cell stops the service is determined as the target cell.

In combination with another embodiment of the present disclosure, the R value of each cell may be determined and ranked based on the R criterion. The first number of cells ranked in front are selected. For example, according to the ranking of the R values, N candidate cells with the best signal qualities ranked in front are selected. In the N cells with the best signal qualities, the second service duration with the longest duration is determined. The cell corresponding to the second service duration with the longest duration is determined as the target cell.

In combination with another embodiment of the present disclosure, in case that the serving cell and the neighboring cell satisfy the S criterion, that is, $S_{rxlev}>0$ and $S_{qual}>0$, the neighboring cell R value and the serving cell R value are calculated based on the R criterion, and the ranking is performed based on the calculation results of the R values. The at least one cell with the maximum R value is determined as the candidate cell. The neighboring cell may also not be required to satisfy the S criterion, that is, in a case of not satisfying the S criterion, the R values of neighboring cells are calculated based on the R criterion, and the serving cell R value and the neighboring cell R value are ranked. The ranking is performed based on the calculation results of R values. The at least one cell with the maximum R value is determined as the candidate cell.

In combination with another embodiment of the present disclosure, in case that the neighboring cell satisfies the S criterion, that is, $S_{rxlev}>0$ and $S_{qual}>0$, the R values of the neighboring cells may be calculated based on the R criterion, and the ranking is performed based on the calculation results of the R values. The at least one neighboring cell with the maximum R value is determined as the candidate cell. The neighboring cell may also not be required to satisfy the S criterion, that is, in a case of not satisfying the S criterion, the R values of neighboring cells are calculated based on the R criterion, and the R values of neighboring cells are ranked. The ranking is performed based on the calculation results of R values. The at least one cell with the maximum R value is determined as the candidate cell.

In yet another embodiment of the present disclosure, for the case of intra-frequency cell measurement, in case that the frequency priority of the neighboring cell is lower than or equal to the frequency priority of the serving cell, the signal quality of the serving cell is lower than the predefined signal quality threshold, and the current moment reaches the first service moment, it is determined to measure the neighboring cell.

In combination with yet another embodiment of the present disclosure, the R value of each cell may be determined and ranked based on the measurement values of neighboring cells and the R criterion. The first number of cells ranked in front are selected. For example, according to the ranking of the R values, N cells with the best signal qualities ranked in front are selected. In the N cells with the best signal qualities, a neighboring cell that provides the service for the terminal fastest is determined. In other words, according to the ranking of the R value of each cell, in the N cells with a maximum R value, a cell with the minimum difference between the second service moment at which the service may be provided for the terminal and the first service moment at which the serving cell stops the service is determined as the target cell.

In combination with yet another embodiment of the present disclosure, the R value of each cell may be determined and ranked based on the R criterion. The first number of cells ranked in front are selected. For example, according to the ranking of the R values, N candidate cells with the best signal qualities ranked in front are selected. In the N cells with the best signal qualities, the second service duration with the longest duration is determined. The cell corresponding to the second service duration with the longest duration is determined as the target cell.

In combination with yet another embodiment of the present disclosure, in case that the serving cell and the neighboring cell satisfy the S criterion, that is, $S_{rxlev}>0$ and $S_{qual}>0$, the neighboring cell R value and the serving cell R value are calculated based on the R criterion, and the ranking is performed based on the calculation results of the R values. The at least one cell with the maximum R value is determined as the candidate cell. The neighboring cell may not be required to satisfy the S criterion, that is, in a case of not satisfying the S criterion, the R values of neighboring cells are calculated based on the R criterion, and the serving cell R value and the neighboring cell R value are ranked. The ranking is performed based on the calculation results of R values. The at least one cell with the maximum R value is determined as the candidate cell.

In combination with yet another embodiment of the present disclosure, in case that the neighboring cell satisfies the S criterion, that is, $S_{rxlev}>0$ and $S_{qual}>0$, the R values of the neighboring cells may be calculated based on the R criterion, and the ranking is performed based on the calculation results of the R values. The at least one neighboring cell with the maximum R value is determined as the candidate cell. The neighboring cell may also not be required to satisfy the S criterion, that is, in a case of not satisfying the S criterion, the R values of neighboring cells are calculated based on the R criterion, and the R values of neighboring cells are ranked. The ranking is performed based on the calculation results of R values. The at least one cell with the maximum R value is determined as the candidate cell.

In still another embodiment of the present disclosure, for the case of intra-frequency cell measurement, in case that the frequency priority of the neighboring cell is lower than or equal to the frequency priority of the serving cell, the signal quality of the serving cell is lower than the predefined signal quality threshold, and the current moment reaches the first service moment, it is determined to measure the neighboring cell.

In combination with still another embodiment of the present disclosure, the R value of each cell may be determined and ranked based on the measurement values of neighboring cells and the R criterion. The first number of cells ranked in front are selected. For example, according to the ranking of the R values, N cells with the best signal qualities ranked in front are selected. In the N cells with the best signal qualities, a neighboring cell that provides the service for the terminal fastest is determined. In other words, according to the ranking of the R value of each cell, in the N cells with a maximum R value, a cell with the minimum difference between the second service moment at which the service may be provided for the terminal and the first service moment at which the serving cell stops the service is determined as the target cell.

In combination with still another embodiment of the present disclosure, the R value of each cell may be determined and ranked based on the R criterion. The first number of cells ranked in front are selected. For example, according to the ranking of the R values, N candidate cells with the best signal qualities ranked in front are selected. In the N cells with the best signal qualities, the second service duration with the longest duration is determined. The cell corresponding to the second service duration with the longest duration is determined as the target cell.

In combination with still another embodiment of the present disclosure, in case that the serving cell and the neighboring cell satisfy the S criterion, that is, $S_{rxlev}>0$ and $S_{qual}>0$, the neighboring cell R value and the serving cell R value are calculated based on the R criterion, and the ranking is performed based on the calculation results of the R values. The at least one cell with the maximum R value is determined as the candidate cell. The neighboring cell may also not be required to satisfy the S criterion, that is, in a case of not satisfying the S criterion, the R values of neighboring cells are calculated based on the R criterion, and the serving cell R value and the neighboring cell R value are ranked. The ranking is performed based on the calculation results of R values. The at least one cell with the maximum R value is determined as the candidate cell.

In combination with still another embodiment of the present disclosure, in case that the neighboring cell satisfies the S criterion, that is, $S_{rxlev}>0$ and $S_{qual}>0$, the R values of the neighboring cells may be calculated based on the R criterion, and the ranking is performed based on the calculation results of the R values. The at least one neighboring cell with the maximum R value is determined as the candidate cell. The neighboring cell may also not be required to satisfy the S criterion, that is, in a case of not satisfying the S criterion, the R values of neighboring cells are calculated based on the R criterion, and the R values of neighboring cells are ranked. The ranking is performed based on the calculation results of R values. The at least one cell with the maximum R value is determined as the candidate cell.

FIG. 20 is a flow chart showing a cell reselection method according to an illustrative embodiment. As shown in FIG. 20, the cell reselection method is performed by a terminal. This embodiment may be executed alone, or may be executed together with any other embodiment of the present disclosure. The method includes a step as follows.

In step S191, the first message is received based on a system message and/or a radio resource control (RRC) message.

In an embodiment of the present disclosure, the terminal receives the time information sent by a network side device based on the system message, and/or the terminal receives the time information sent by a network side device based on the RRC message.

Based on the same/similar concept, an embodiment of the present disclosure also provides a cell reselection method.

FIG. 21 is a flow chart showing a cell reselection method according to an illustrative embodiment. As shown in FIG. 21, the cell reselection method is performed by a network side device, and includes a step as follows.

In step S201, a first message is sent.

In an embodiment of the present disclosure, the first message includes time information for triggering a terminal to perform a cell reselection. The time information may include at least one of time information when a serving cell may provide a service, time information when a serving cell stops a service, and time information of a neighboring cell that is about to provide a service.

The time information when the serving cell may provide the service may be duration information that the serving cell provides the service. For example, a duration that may be provided for the terminal is N minutes. The time information when the serving cell stops the service may be a stopping moment at which the serving cell provides the service for the terminal. For example, the stopping moment at which the service is provided by the serving cell is XX hours, XX minutes, and XX seconds. That is, at this moment, the serving cell stops the service. The time information of the neighboring cell that is about to provide the service may be a starting service moment at which the neighboring cell may provide the service for the terminal, or a service duration for which the service is provided for the terminal, or the like.

In some embodiments of the present disclosure, the network side device sends the time information of the serving cell and/or the neighboring cell, so that the terminal determines a time to perform measurement on the neighboring cell and perform the cell reselection according to the time information.

By means of the cell reselection method provided in the present disclosure, the network side device provides the time information of the service of the serving cell or the neighboring cell, and determines the measurement and reselection of the cell based on the time information, so that the terminal will not cause too late the cell reselection due to sudden unavailability of the serving cell.

In some embodiments of the present disclosure, the time information includes first time information and/or second time information. The first time information includes a first service duration for which a serving cell provides a service and a first service moment at which a serving cell provides a service. The second time information includes a second service duration for which a neighboring cell provides a service and a second service moment at which a neighboring cell provides a service.

FIG. 22 is a flow chart showing a cell reselection method according to an illustrative embodiment. As shown in FIG. 22, the cell reselection method is performed by a network side device. This embodiment may be executed alone, or may be executed together with any other embodiment of the present disclosure. The method includes a step as follows.

In step S211, the first message is sent based on a system message and/or a radio resource control (RRC) message.

The network side device, such as a base station and a serving cell, sends the first message through the system message and/or the RRC message to configure the time information for the terminal.

Based on the same concept, an embodiment of the present disclosure also provides a cell reselection apparatus.

It may be understood that, in order to realize the above-mentioned functions, the cell reselection apparatus provided in the embodiment of the present disclosure includes corresponding hardware structures and/or software modules for executing various functions. Combining with units and algorithm steps of various examples disclosed in the embodiments of the present disclosure, the embodiments of the present disclosure may be implemented in the form of hardware or a combination of hardware and computer software. Whether a function is executed by hardware or computer software driving hardware depends on the specific application and design constraints of the technical solution. Those skilled in the art may use different methods to implement the described functions for each specific application, but such implementation should not be considered beyond the scope of the technical solutions of the embodiments of the present disclosure.

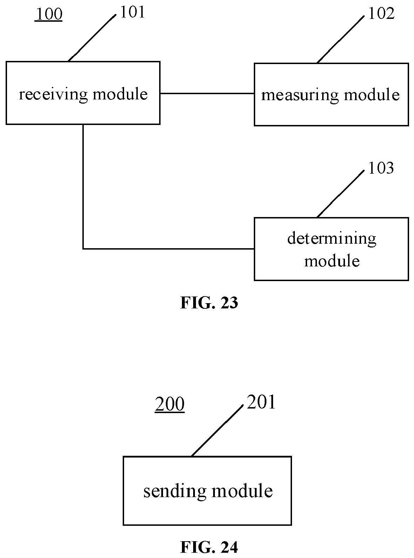

FIG. 23 is a block diagram showing a cell reselection apparatus according to an illustrative embodiment. Referring to FIG. 23, a cell reselection apparatus 100 includes a receiving module 101. The receiving module 101 is configured to receive a first message, in which the first message includes time information for triggering the terminal to perform a cell reselection.

In an embodiment of the present disclosure, the time information includes first time information. The apparatus further includes a measuring module 102. The measuring module is configured to measure a neighboring cell based on the first time information.

In an embodiment of the present disclosure, the measuring module 102 is configured to measure the neighboring cell based on the first time information, in response to a frequency priority of the neighboring cell being lower than or equal to a frequency priority of a serving cell.

In an embodiment of the present disclosure, the measuring module 102 is configured to measure the neighboring cell based on the first time information, in case that a signal quality of a serving cell is lower than a predefined signal quality threshold, in response to a frequency priority of the neighboring cell being lower than or equal to a frequency priority of the serving cell.

In an embodiment of the present disclosure, the measuring module 102 is configured to measure the neighboring cell, in response to a frequency priority of the neighboring cell being higher than a frequency priority of a serving cell.

In an embodiment of the present disclosure, the first time information includes a first service duration for which a serving cell provides a service. The measuring module 102 is configured to determine a timer duration based on the first service duration, and determine to measure the neighboring cell in response to determining that the timer duration expires.

In an embodiment of the present disclosure, the first time information includes a first service moment at which a serving cell provides a service. The measuring module 102 is configured to determine to measure the neighboring cell, in response to a current moment reaching the first service moment.

In an embodiment of the present disclosure, the measuring module 102 is further configured to determine a service time threshold for the cell reselection. It is determined to measure the neighboring cell, in response to a relationship between the first time information and the service time threshold.

In an embodiment of the present disclosure, after the neighboring cell is measured, the apparatus further includes a determining module 103. The determining module is configured to determine a target cell based on an R criterion.

In an embodiment of the present disclosure, the determining module 103 is configured to determine a target cell based on the second time information.

In an embodiment of the present disclosure, the second time information includes a second service moment at which the neighboring cell provides a service.

The determining module 103 is configured to determine a minimum difference between the second service moment and the first service moment, and determine a cell corresponding to the minimum difference as the target cell.

In an embodiment of the present disclosure, the second time information includes a second service duration for which the neighboring cell provides a service. The determining module 103 is configured to determine the second service duration with a longest duration, and determine a cell corresponding to the second service duration with the longest duration as the target cell.

In an embodiment of the present disclosure, the target cell satisfies an S criterion.

In an embodiment of the present disclosure, the second time information includes a second service moment at which the neighboring cell provides a service. The determining module 103 is configured to determine at least one candidate cell based on an R criterion. In the at least one candidate cell, a minimum difference between the second service moment and the first service moment is determined, and a candidate cell corresponding to the minimum difference is determined as the target cell.

In an embodiment of the present disclosure, the second time information includes a second service duration for which the neighboring cell provides a service.

The determining module 103 is configured to determine at least one candidate cell based on an R criterion. It is determined as the target cell a candidate cell with a longest second service duration in the at least one candidate cell.

In an embodiment of the present disclosure, the determining module 103 is configured to in response to the serving cell and the neighboring cell satisfying the S criterion, determine a maximum R value in a serving cell R value and a neighboring cell R value based on the R criterion, and determine at least one cell corresponding to the maximum R value as a candidate cell, or in response to the neighboring cell satisfying the S criterion, determine a maximum R value in R values of neighboring cells based on the R criterion, and determine at least one neighboring cell corresponding to the maximum R value as a candidate cell.

In an embodiment of the present disclosure, the determining module 103 is configured to in response to determining that the serving cell and the neighboring cell do not satisfy the S criterion, determine a maximum R value in a serving cell R value and a neighboring cell R value based on the R criterion, and determine at least one cell corresponding to the maximum R value as a candidate cell, or in response to determining that the neighboring cell does not satisfy the S criterion, determine a maximum R value in R values of neighboring cells based on the R criterion, and determine at least one neighboring cell corresponding to the maximum R value as a candidate cell.

In an embodiment of the present disclosure, the receiving module 101 is configured to receive the first message based on a system message and/or a radio resource control (RRC) message.

FIG. 24 is a block diagram showing a cell reselection apparatus according to an illustrative embodiment. Referring to FIG. 24, a cell reselection apparatus 200 includes a sending module 201. The sending module 201 is configured to send a first message, in which the first message includes time information for triggering a terminal to perform a cell reselection.

In an embodiment of the present disclosure, the time information includes first time information and/or second time information.

In an embodiment of the present disclosure, the first time information includes a first service duration for which a serving cell provides a service and a first service moment at which a serving cell provides a service. The second time information includes a second service duration for which a neighboring cell provides a service and a second service moment at which a neighboring cell provides a service.

In an embodiment of the present disclosure, the sending module 201 is configured to send the first message based on a system message and/or a radio resource control (RRC) message

Regarding the apparatus in the above-mentioned embodiment, the specific manner in which each module performs operations has been described in detail in the embodiment of the method, which will not be elaborated herein.

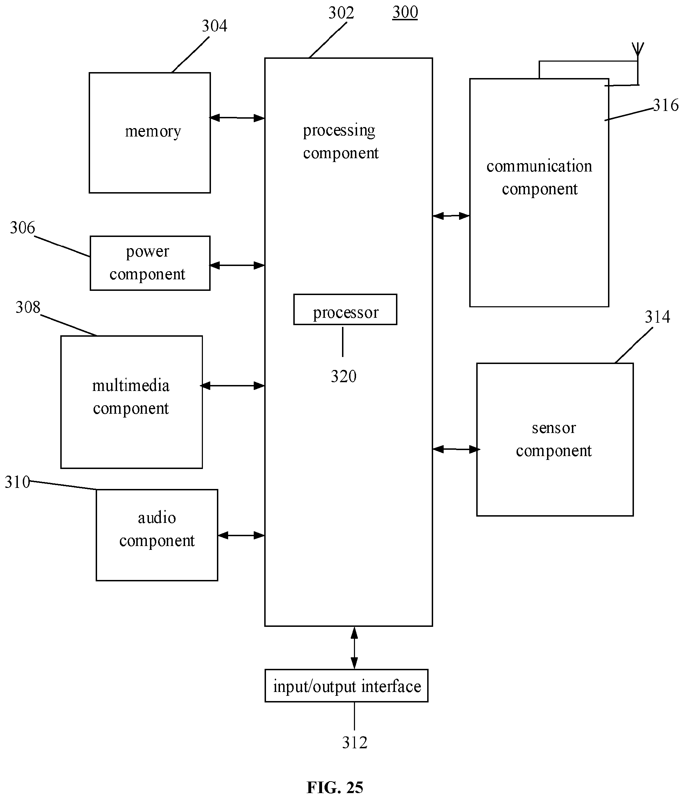

FIG. 25 is a block diagram showing a device 300 for a cell reselection according to an illustrative embodiment. For example, the device 300 may be a mobile phone, a computer, a digital broadcast terminal, a messaging device, a game console, a tablet device, a medical device, a fitness device, a personal digital assistant, or the like.

Referring to FIG. 25, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, phone calls, data communications, camera operations, and recording operations. The processing component 302 may include one or more of processors 320 to execute instructions to perform all or some of the steps in the above-described methods. Moreover, the processing component 302 may include one or more of modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300 device 300. Examples of such data include instructions for any applications or methods operated on the device 300, contact data, phonebook data, messages, pictures, videos, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more of power sources, and any other components associated with the generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more of touch sensors to sense touches, swipes, and gestures on the touch panel. The touch sensors may not only sense a boundary of a touch or swipe action, but also sense a duration and a pressure associated with the touch or swipe action. In some embodiments, the multimedia component 308 includes a front camera and/or a rear camera. The front camera and/or the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone (MIC) configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as keyboards, click wheels, buttons, and the like. The buttons may include, but are not limited to, a home button, a volume button, a starting button, and a locking button.

The sensor component 314 includes one or more of sensors to provide status assessments of various aspects of the device 300. For instance, the sensor component 314 may detect an open/closed status of the device 300, relative positioning of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may further include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate communication, wired or wireless, between the device 300 and other devices. The device 300 may access a wireless network based on a communication standard, such as WiFi, 2G, or 3G, or a combination thereof. In an illustrative embodiment, the communication component 316 receives a broadcast signal or broadcast associated information from an external broadcast management system via a broadcast channel. In an illustrative embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 300 may be implemented with one or more of application specific integrated circuits (ASICs), a digital signal processor (DSP), a digital signal processing device (DSPD), a programmable logic device (PLD), a field programmable gate array (FPGA), a controller, a micro-controller, a microprocessor, or other electronic elements, for performing the above-mentioned method.

In an illustrative embodiment, there is also provided a non-transitory computer readable storage medium including instructions, such as included in the memory 304, executable by the processor 320 in the device 300, for completing the above-mentioned method. For example, the non-transitory computer-readable storage medium may be a ROM, a random access memory (RAM), a CD-ROM, a magnetic tape, a floppy disc, an optical data storage device, and the like.

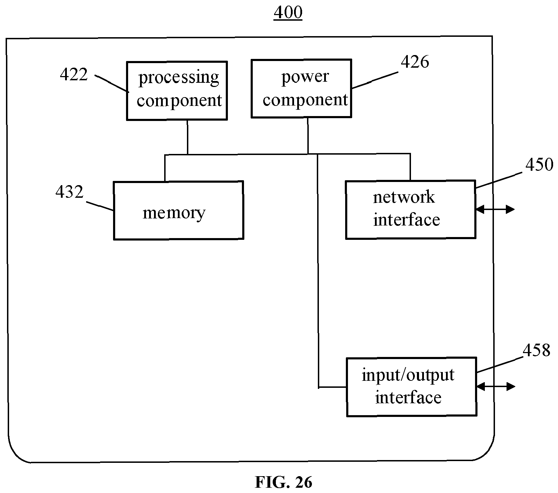

FIG. 26 is a block diagram showing a device 400 for a cell reselection according to an illustrative embodiment. For example, the device 400 may be provided as a server. Referring to FIG. 26, the device 400 includes a processing component 422, which further includes one or more of processors, and memory resources represented by a memory 432 for storing instructions executable by the processing component 422, such as an application program. The application program stored in the memory 432 may include one or more modules each corresponding to a set of instructions. In addition, the processing component 422 is configured to execute instructions to perform the above-mentioned method.

The device 400 may further include a power component 426 configured to perform power management of the device 400, a wired or wireless network interface 450 configured to connect the device 400 to a network, and an input/output (I/O) interface 458. The device 400 may operate based on an operating system stored in the memory 432, such as Windows Server™, Mac OS X™, Unix™, Linux™, FreeBSD™, or the like.

It is further understood that "a plurality" in the present disclosure refers to two or more, and other quantifiers are similar thereto. "And/or," which describes an associated relationship of associated objects, means that there may be three relationships, for example, A and/or B, which may mean that A exists alone, A and B exist at the same time, and B exists alone. A character "/" generally indicates that contextual objects are in an "or" relationship. "A/an" and "the" in singular forms are intended to include plural forms, unless clearly indicated in the context otherwise.

It is further understood that terms such as "first," and "second" are used to describe various information, these information should not be limited by these terms. These terms are only used for distinguishing information of the same type from each other and do not denote a particular order or degree of importance. As a matter of fact, the terms such as "first," and "second" may be used interchangeably. For example, first information may also be referred to as second information, and similarly, the second information may also be referred to as the first information, without departing from the scope of embodiments of the present disclosure.

It is further understood that although operations are described in a specific order in the accompanying drawings in the embodiments of the present disclosure, it should not be understood that these operations are required to be performed in the specific order shown or in a serial order, or that all of the operations shown are required to be performed to obtain desired results. In certain circumstances, multitasking and parallel processing may be advantageous.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

**Claims**

1. A cell reselection method, performed by a terminal, comprising:
   receiving a first message, wherein the first message comprises time information for triggering the terminal to perform a cell reselection.

2. The cell reselection method of claim 1, wherein the time information comprises first time information; and the method further comprises:
   measuring a neighboring cell based on the first time information.

3. The cell reselection method of claim 2, wherein measuring the neighboring cell based on the first time information comprises:
   measuring the neighboring cell based on the first time information, in response to a frequency priority of the neighboring cell being lower than or equal to a frequency priority of a serving cell.

4. The cell reselection method of claim 2, wherein measuring the neighboring cell based on the first time information comprises:
   measuring the neighboring cell based on the first time information, in case that a signal quality of a serving cell is lower than a predefined signal quality threshold, in response to a frequency priority of the neighboring cell being lower than or equal to a frequency priority of the serving cell.

5. The cell reselection method of claim 2, wherein measuring the neighboring cell based on the first time information comprises:
   measuring the neighboring cell, in response to a frequency priority of the neighboring cell being higher than a frequency priority of a serving cell.

6. The cell reselection method of any one of claims 2 to 4, wherein the first time information comprises a first service duration for which a serving cell provides a service; and
measuring the neighboring cell based on the first time information comprises:
determining a timer duration based on the first service duration, and determining to measure the neighboring cell in response to determining that the timer duration expires.

7. The cell reselection method of any one of claims 2 to 4, wherein the first time information comprises a first service moment at which a serving cell provides a service; and
measuring the neighboring cell based on the first time information of the serving cell comprises:
determining to measure the neighboring cell, in response to a current moment reaching the first service moment.

8. The cell reselection method of any one of claims 2 to 4, wherein the method further comprises:

   determining a service time threshold for the cell reselection;
   determining to measure the neighboring cell, in response to a relationship between the first time information and the service time threshold.

9. The cell reselection method of any one of claims 2 to 8, wherein after the neighboring cell is measured, the method further comprises:
determining a target cell based on an R criterion.

10. The cell reselection method of any one of claims 1 to 8, wherein the time information comprises second time information, and the method further comprises:
determining a target cell based on the second time information.

11. The cell reselection method of claim 10, wherein the second time information comprises a second service moment at which the neighboring cell provides a service; and
determining the target cell based on the second time information comprises:
determining a minimum difference between the second service moment and the first service moment, and determining a cell corresponding to the minimum difference as the target cell.

12. The cell reselection method of claim 10, wherein the second time information comprises a second service duration for which the neighboring cell provides a service; and
determining the target cell based on the second time comprises:
determining the second service duration with a longest duration, and determining a cell corresponding to the second service duration with the longest duration as the target cell.

13. The cell reselection method of claim 11 or 12, wherein the target cell satisfies an S criterion.

14. The cell reselection method of claim 10, wherein the second time information comprises a second service moment at which the neighboring cell provides a service; and
determining the target cell based on the second time information comprises:

   determining at least one candidate cell based on an R criterion;
   determining a minimum difference between the second service moment and the first service moment, in the at least one candidate cell, and determining a candidate cell corresponding to the minimum difference as the target cell.

15. The cell reselection method of claim 10, wherein the second time information comprises a second service duration for which the neighboring cell provides a service; and
determining the target cell based on the second time information comprises:

   determining at least one candidate cell based on an R criterion;
   determining as the target cell a candidate cell with a longest second service duration in the at least one candidate cell.

16. The cell reselection method of any one of claim 14 or 15, wherein determining the at least one candidate cell based on the R criterion comprises:

determining a maximum R value in a serving cell R value and a neighboring cell R value based on the R criterion, and determining at least one cell corresponding to the maximum R value as a candidate cell; or
determining a maximum R value in R values of neighboring cells based on the R criterion, and determining at least one neighboring cell corresponding to the maximum R value as a candidate cell.

17. The cell reselection method of any one of claim 14 or 15, wherein determining the at least one candidate cell based on the R criterion comprises:

in case that an S criterion is not required to be satisfied, determining a maximum R value in a serving cell R value and a neighboring cell R value based on the R criterion, and determining at least one cell corresponding to the maximum R value as a candidate cell; or
in case that an S criterion is not required to be satisfied, determining a maximum R value in R values of neighboring cells based on the R criterion, and determining at least one neighboring cell corresponding to the maximum R value as a candidate cell.

18. The cell reselection method of claim 1, wherein receiving the first message comprises:
receiving the first message based on a system message and/or a radio resource control (RRC) message.

19. A cell reselection method, performed by a network side device, comprising:
sending a first message, wherein the first message comprises time information for triggering a terminal to perform a cell reselection.

20. The cell reselection method of claim 19, wherein the time information comprises first time information and/or second time information.

21. The cell reselection method of claim 20, wherein the first time information comprises a first service duration for which a serving cell provides a service and a first service moment at which a serving cell provides a service; and
the second time information comprises a second service duration for which a neighboring cell provides a service and a second service moment at which a neighboring cell provides a service.

22. The cell reselection method of claim 19, wherein sending the first message comprises:
sending the first message based on a system message and/or a radio resource control (RRC) message.

23. A cell reselection apparatus, applied to a terminal, comprising:
a receiving module configured to receive a first message, wherein the first message comprises time information for triggering the terminal to perform a cell reselection.

24. A cell reselection apparatus, applied to a network side device, comprising:
a sending module configured to send a first message, wherein the first message comprises time information for triggering a terminal to perform a cell reselection.

25. A cell reselection device, comprising:

a processor; and
a memory,
wherein a computer program is stored in the memory, and the processor is configured to execute the computer program stored in the memory to cause the device to execute the method of any one of claims 1 to 18, or to cause the device to execute the method of any one of claims 19 to 22.

26. A computer-readable storage medium having stored therein instructions that, when executed, cause the method of any one of claims 1 to 18 to be implemented, or cause the method of any one of claims 19 to 22 to be implemented.

network device

terminal

terminal

**FIG. 1**

receiving a first message

S11

**FIG. 2**

measuring a neighboring cell based on the
first time information

S21

**FIG. 3**

measuring the neighboring cell based on the first time
information, in response to a frequency priority of the
neighboring cell being lower than or equal to a frequency
priority of a serving cell

S31

**FIG. 4**

measuring the neighboring cell based on the first time information, in case that a signal quality of a serving cell is lower than a predefined signal quality threshold, in response to a frequency priority of the neighboring cell being lower than or equal to a frequency priority of the serving cell

S41

**FIG. 5**

measuring the neighboring cell, in response to a frequency priority of the neighboring cell being higher than a frequency priority of a serving cell

S51

**FIG. 6**

determining a timer duration based on the first service duration, and determining to measure the neighboring cell in response to determining that the timer duration expires

S61

**FIG. 7**

determining to measure the neighboring cell, in response to a current moment reaching the first service moment

S71

**FIG. 8**

determining a service time threshold for the cell reselection

S81

determining to measure the neighboring cell, in response to a relationship between the first time information and the service time threshold

S82

**FIG. 9**

determining a target cell based on an R criterion /S91

**FIG. 10**

determining a target cell based on the second time information /S101

**FIG. 11**

determining a minimum difference between the second service moment and the first service moment, and determining a cell corresponding to the minimum difference as the target cell /S111

**FIG. 12**

determining the second service duration with a longest duration, and determining a cell corresponding to the second service duration with the longest duration as the target cell /S121

**FIG. 13**

determining at least one candidate cell based on an R criterion /S131

determining a minimum difference between the second service moment and the first service moment, in the at least one candidate cell, and determining a candidate cell corresponding to the minimum difference as the target cell /S132

**FIG. 14**

determining at least one candidate cell based on an R criterion

S141

determining as the target cell a candidate cell with a longest second service duration in the at least one candidate cell

S142

**FIG. 15**

determining a maximum R value in a serving cell R value and a neighboring cell R value based on the R criterion, and determining at least one cell corresponding to the maximum R value as a candidate cell

S151

**FIG. 16**

determining a maximum R value in R values of neighboring cells based on the R criterion, and determining at least one neighboring cell corresponding to the maximum R value as a candidate cell

S161

**FIG. 17**

in case that an S criterion is not required to be satisfied, determining a maximum R value in a serving cell R value and a neighboring cell R value based on the R criterion, and determining at least one cell corresponding to the maximum R value as a candidate cell

S171

**FIG. 18**

in case that an S criterion is not required to be satisfied, determining a maximum R value in R values of neighboring cells based on the R criterion, and determining at least one neighboring cell corresponding to the maximum R value as a candidate cell

S181

**FIG. 19**

receiving the first message based on a system message and/or a radio resource control (RRC) message

S191

**FIG. 20**

sending a first message

S201

**FIG. 21**

sending the first message based on a system message and/or a radio resource control (RRC) message

S211

**FIG. 22**

100    101

```
┌─────────────────────┐         ┌─────────────────────┐
│                     │         │                     │
│  receiving module   │─────────│  measuring module   │
│                     │         │                     │
└─────────────────────┘         └─────────────────────┘
         │                                    102
         │
         │                              103
         │                       ┌─────────────────────┐
         │                       │                     │
         └───────────────────────│    determining      │
                                 │      module         │
                                 └─────────────────────┘
```

**FIG. 23**

200    201

```
┌─────────────────────┐
│                     │
│   sending module    │
│                     │
└─────────────────────┘
```

**FIG. 24**

**FIG. 25**

FIG. 26

# INTERNATIONAL SEARCH REPORT

| International application No. |
|---|
| **PCT/CN2021/084782** |

**A. CLASSIFICATION OF SUBJECT MATTER**

H04W 36/30(2009.01)i; H04W 84/06(2009.01)i

According to International Patent Classification (IPC) or to both national classification and IPC

**B. FIELDS SEARCHED**

Minimum documentation searched (classification system followed by classification symbols)

H04W4; H04Q

Documentation searched other than minimum documentation to the extent that such documents are included in the fields searched

Electronic data base consulted during the international search (name of data base and, where practicable, search terms used)

CNTXT; VEN; DWPI; 3GPP: 非陆地, 非地面, NTN, 时间, 时刻, 时长, 定时, 测量, 邻, 重选, non, terrestrial+time, timer, timing, measur+, neighbour+, adjacent, reselect+

**C. DOCUMENTS CONSIDERED TO BE RELEVANT**

| Category* | Citation of document, with indication, where appropriate, of the relevant passages | Relevant to claim No. |
|---|---|---|
| X | NOKIA et al. "Report from [113-e][105][NTN] Idle mode aspects (Nokia)" *R2-2102015 3GPP TSG-RAN WG2 Meeting #113*, 10 February 2021 (2021-02-10), section 3 | 1-26 |
| X | WO 2020231123 A1 (LG ELECTRONICS INC.) 19 November 2020 (2020-11-19) description, paragraphs [107]-[114] and [334]-[394], and figures 13-17 | 1-2, 10, 12, 15, 18-26 |
| X | CN 111565428 A (HUAWEI TECHNOLOGIES CO., LTD.) 21 August 2020 (2020-08-21) claims 1-2, and description, paragraphs [0144]-[0156] and [0165]-[0293] | 1-5, 10, 18-26 |
| A | CN 1794877 A (HUAWEI TECHNOLOGIES CO., LTD.) 28 June 2006 (2006-06-28) entire document | 1-26 |
| A | CN 108243460 A (LEADCORE TECHNOLOGY CO., LTD. et al.) 03 July 2018 (2018-07-03) entire document | 1-26 |

☐ Further documents are listed in the continuation of Box C. ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **20 October 2021** | **05 January 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
|---|
| **PCT/CN2021/084782** |

| Patent document cited in search report | | | Publication date (day/month/year) | Patent family member(s) | | | Publication date (day/month/year) |
|---|---|---|---|---|---|---|---|
| WO | 2020231123 | A1 | 19 November 2020 | None | | | |
| CN | 111565428 | A | 21 August 2020 | WO | 2020164430 | A | 20 August 2020 |
| CN | 1794877 | A | 28 June 2006 | EP | 1954074 | A1 | 06 August 2008 |
| | | | | EP | 1954074 | A4 | 25 February 2009 |
| | | | | EP | 1954074 | B1 | 11 May 2011 |
| | | | | WO | 2007054019 | A1 | 18 May 2007 |
| | | | | CN | 100382655 | C | 16 April 2008 |
| | | | | CN | 101160995 | A | 09 April 2008 |
| | | | | CN | 101160995 | B | 23 May 2012 |
| | | | | AT | 509481 | T | 15 May 2011 |
| CN | 108243460 | A | 03 July 2018 | None | | | |

Form PCT/ISA/210 (patent family annex) (January 2015)